# EUROPEAN PATENT APPLICATION

(11) **EP 0 982 572 A1**
(43) Date of publication of application: **01.03.2000**
(21) Application number: 98306731.5
(22) Date of filing: 21.08.1998
(51) Int. Cl.: G01J 1/50, C09K 9/02

(54) **Ultraviolet radiation indicator**

(71) Applicant: Tuochi Technology Co. Ltd., Hsinchu (TW)
(72) Inventor: Chen, Hugo, Y. R., Hsinchu, Taiwan (TW)
(74) Representative: Woods, Geoffrey Corlett

(57) **Abstract**

An ultraviolet-sensitive compound and an ultraviolet absorbent mixed in different ratio and then applied to at least one area. When exposed to sunlight or ultraviolet radiation, said area(s) will undergo color changes in accordance with different intensities of ultraviolet radiation. With the ultraviolet index readings attached, the on-site indicator of the intensity of ultraviolet radiation will be immediately obtained.

## Description

### FIELD OF INVENTION

The present invention relates to an indicator capable of indicating the on-site intensity of ultraviolet radiation immediately by applying an ultraviolet-sensitive compound and an ultraviolet absorbent at the same time or in sequence onto an article or a substrate. Different intensity of ultraviolet radiation can be indicated because the color change in each area is different and the ultraviolet index readings are attached. The user can obtain the on-site ultraviolet intensity and protect the skin in advance.

### BACKGROUND OF INVENTION

The sunlight reaching the Earth can be roughly divided into three bands: infrared, visible light and ultraviolet (UV). Generally speaking, the spectrum of the visible light is between 400 nm and 730 nm, and light with a wavelength longer than 730 nm is called "infrared," while light with a wavelength shorter than 400 nm is called "ultraviolet." Among them, the ultraviolet has been proven to cause the most damage to human skin.

The ultraviolet spectrum is usually further divided into three bands -- UVA, UVB and UVC. The spectrum of these bands are 320 - 400 nm, 290 - 320 nm and 200 - 290 nm for UVA, UVB, and UVC, respectively. Among them, the UVC with the shortest wavelength is thought to be the most harmful to life on Earth. However, almost all the UVC is absorbed by the ozone layer located within the atmosphere called the "stratosphere," and the remaining ultraviolet radiation reaching the Earth will be the UVA and UVB. The effect on the skin caused by the UVB when exposure is short is to cause redness of skin and to suppress the synthesis of Vitamin D, and when exposure becomes longer to cause diseases such as skin cancer, cataracts and the suppression and/or destruction of the immune system. As for UVA radiation, it usually promotes the synthesis of Vitamin D on the skin. However, excess exposure to UVA radiation will accelerate the aging of skin, damage the immune system, or cause the formation of cataracts.

The ozone layer located in the stratosphere of the atmosphere can effectively absorb harmful radiation (all the UVC and part of the UVB), and therefore provides sufficient protection for animal and plant on the Earth. However, in 1974, scientists discovered that the application of chlorofluorocarbons, i.e., CIFC, has upset the balance between the dissociation and synthesis of O₃ (O₂ + O•⇔O₃) in the ozone layer, and has led to the reduction of the amount of ozone. The ozone layer has gradually become depleted to the extent that a huge hole in the ozone layer over the South Pole has been discovered. On the other hand, in the past, people used to hold the concept that a brown or tan skin color is a symbol of health, but now, the concept has changed since people have become aware of the correlation between exposure to sunlight, particularly ultraviolet radiation, and diseases like skin cancer, cataracts, etc. So far, many methods of protecting human skin from too much exposure to ultraviolet radiation have been developed. As a matter of fact, since the 80's, an activity teaching people how to avoid over-exposure to sunlight was initiated in Australia and later caught on in New Zealand, Canada and the U.S. (there is proof showing that people with white skin get such diseases more easily than people with colored skin). The detection and monitoring of the intensity of ultraviolet radiation reaching the Earth has become more important than ever after the aforesaid activities became widespread all over the world. Gradually, with the setting-up of monitoring sites and the announcement of the definition of the ultraviolet index (UVI), every day people will be informed of the UVI for the next day on the daily weather forecasts and will be able to properly protect themselves from damage caused by ultraviolet radiation.

At the present time, the definition of local UVI is based on two systems defined by two different organizations: one is the National Weather Bureau of the Ministry of Transportation and Communication in the ROC (Taiwan) (a.k.a. the NWB), which defines the UVI as 1 UVI = 100 Joule/m²; the other one is World Meteorological Organization WMO (a.k.a. the WMO), which defines the UVI as 1 UVI = 25 mW/m². If based on a one-hour dosage, 1 UVI_{NWB} = 1.11 UVI_{WMO}. The UVI is defined as the ultraviolet radiation reaching the Earth as expressed in units of one hundred joules per m² during the midday hour (from about 11:30 to 12:30) when sunlight is assumed to be at its strongest. That is, when the ultraviolet radiation is 500 Joule/m², the UVI will be defined as 5 according to NWB's definition, and 5.6 according to the WMO's definition. To facilitate the public's use of the UVI, the UVI has been classified into five degrees, i.e., "weakest"(0-2), "weak"(3-4), "medium"(5-6), "strong"(7-9) and "acute"(10 and above). Nowadays, the report of UVI in daily weather forecasts has become as popular and important as other weather information such as temperature, the probability of rain, and air quality, etc.

In the past, equipment for monitoring ultraviolet radiation was more delicate and expensive. The circuit board, optical filters, and power input device needed to be incorporated that the size of such equipment is so huge that it is very undesirable for people to carry it. Therefore, such expensive equipment would only be installed in laboratories or research institutes. To make the monitoring task more handy and popular, people have begun to develop ultraviolet-sensitive compounds, such as spiropyran and spirooxazine, and apply them, after mixing them with proper solvents, onto material such as plastic or glass. Once the coated material is exposed to sunlight, there is a color change. Due to the simple composition and the light weight, the detection apparatus has been quickly and widely applied to many articles. US Patent Nos. 5,387,798 and 5,581,090 both relate to the detection of ultraviolet radiation intensity. However, these two patents focus on showing the existence of ultraviolet radiation rather than the intensity of ultraviolet radiation. In other words, the ultraviolet-sensitive dyes of these two patents are coated on a substrate and will change its color while being exposed to the ultraviolet radiation so that the existence of ultraviolet radiation is shown.
The present invention relates to a mixture of an ultraviolet absorbent and an ultraviolet-sensitive compound with different mixing ratios. Particularly, the present invention is capable of showing the intensity of ultraviolet radiation by having different colors, or different shades of the same color, in accordance with different intensities, through the mixing of different kinds of ultraviolet-sensitive compounds and ultraviolet absorbents in different ratios. Furthermore, the present invention makes use of the ultraviolet index readings to show the intensity of the ultraviolet radiation on site to users in a more convenient and quicker way, particularly after being applied directly onto a daily life article, such as watch, umbrella, ring, racket, or hat.

### SUMMARY OF INVENTION

One object of the present invention is to provide an indicator capable of showing the intensity of ultraviolet radiation, such indicator comprising one or more areas, with different ultraviolet-sensitive compounds applied in each area, and an ultraviolet absorbent applied onto each area with one identical ratio in all areas or different ratios in each area. When exposed to the sunlight, each area of the indicator will show different color changes due to the different intensities of ultraviolet radiation, and immediately provide the intensity using the UVI because the index readings are attached to each area.

Another object of the present invention is to provide an indicator capable of showing the intensity of ultraviolet radiation, such indicator comprising one or more areas with an identical ultraviolet-sensitive compound applied in each area, and an ultraviolet absorbent applied onto each area with one identical ratio in all areas or different ratios in each area. When exposed to sunlight, each area of the indicator will show color changes with different shades in accordance with the intensity of ultraviolet radiation, and the UVI reading indicating the intensity of ultraviolet radiation can be obtained immediately, particularly since the index readings are attached.

The third object of the present invention is to provide a method for making an indicator capable of showing the intensity of ultraviolet radiation, the creation of such indicator involves the application of an ultraviolet-sensitive compound and an ultraviolet absorbent onto a material or a substrate in sequence in different ratios or in the same ratio in each area. The resulting indicator will show different colors depending on the intensity of ultraviolet radiation.

### BRIEF DESCRIPTION OF THE DRAWING

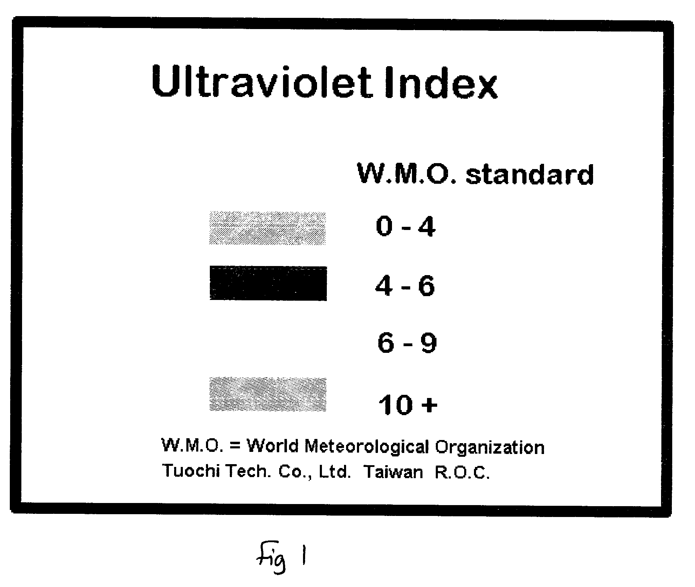

Fig 1 is a plan view of an indicator of ultraviolet radiation intensity of the present invention.

### DETAILED DESCRIPTION OF INVENTION

The present invention relates to an indicator of ultraviolet radiation intensity. The indicator comprises at least one area, preferably four or more, a mixture of an ultraviolet-sensitive compound and an ultraviolet absorbent applied to each area. When exposed to different ultraviolet radiation, each area will change colors, one after another, in accordance with the intensity of ultraviolet radiation. Different kinds of ultraviolet-sensitive compounds are applied onto each area and then an ultraviolet absorbent is applied to each area in either different ratios or the same ratio. When exposed to ultraviolet radiation, different areas will change colors according to the intensity of ultraviolet radiation. In addition, it is also possible to apply identical ultraviolet-sensitive compounds mixed with ultraviolet absorbents in different ratios in each area of the indicator in accordance with the present invention. Therefore, when exposed to ultraviolet radiation, different areas will show different shades of the same color. Particularly, the ultraviolet index readings are attached to each area so that the on-site ultraviolet radiation intensity is obtained. Furthermore, if applying the same ratio but different thickness of the ultraviolet absorbent onto each area, when exposed to ultraviolet radiation, the area will show color changes and the ultraviolet radiation intensity will be shown either through the different colors shown in each area or through differing the shades of the same color in each area.

The ultraviolet-sensitive compound used in the present invention may be selected from the group consisting of spiropyran, spirooxazine, chromate and the mixture thereof, and the ultraviolet absorbent used herein is pyridine compound, such as 2 - (2' - hydroxy - 5' - methylphenyl) - nebzotriazole or similar compounds used in the prior art, which are capable of absorbing and/or shielding ultraviolet radiation. The indicator of the present invention can be directly applied onto articles for daily use which are often used outdoors, such as parasols, tennis rackets, swimsuits, watches, rings and wind shields. The thickness of the matrix which contains the ultraviolet-sensitive compound used in the subject indicator is between 10 µm and 1500 µm, preferably between 20 µm and 100 µm.

The present invention provides an indicator of ultraviolet radiation intensity comprising at least one area, with different ultraviolet-sensitive compounds applied in matrix in the thickness of 10 µm to 1500 µm to each area, preferably 20 µm to 100 µm, and at least one layer of ultraviolet absorbent also applied to said area. The ultraviolet absorbent is increased at a ratio of 0% to 20% by weight in each area, based on the weight of plastic pallets used in the prepared solvent, and the ultraviolet absorbent in the first area may be 0% by weight.

The present invention further provides an ultraviolet radiation intensity indicator comprising at least one area, with an identical ultraviolet-sensitive compound applied in matrix in the thickness of 10 µm to 1500 µm to each area and at least one layer of ultraviolet absorbent also applied. The other conditions are the same as mentioned in the preceding paragraph.

A coating may be used in the preparation of the indicator in the present invention. The method for preparing the indicator of the present invention comprises the steps of preparing a solvent by dissolving plastic pallets in an organic solvent in a ratio of 1:5 to 1:20, mixing an ultraviolet-sensitive compound with the solvent to form a solution in the ratio of 0.001% to 60% by weight, based on the weight of plastic pallets used, applying the solution onto an article or a substrate, and applying at least one layer of ultraviolet absorbent to an article or a substrate. The plastic pallets are selected from the group consisting of polyethylene, polypropylene, polyvinyl chloride and polyvinylbenzene, and the organic solvent is selected from benzene, toluene, acetone, THF or other similar solvent capable of dissolving the plastic pallets. After the solvent is completely vaporized, a film is formed on the article or the substrate. In accordance with the present invention, different ultraviolet-sensitive compounds may be applied to each area. Therefore, upon exposure to the ultraviolet radiation, different areas will show different colors. On the other hand, if an identical ultraviolet-sensitive compound is applied to all areas, the different areas will show the same color, just different shades, when exposed to ultraviolet radiation.

The present invention is embodied with coating though, it is not intended to limit the subject indicator can only be obtained by the above method. Other manners, such as spraying, printing and injection which are known in the art can also be used in the present invention.

While one layer of ultraviolet absorbent are applied, the ultraviolet absorbent may be increased at a ratio in the range of 0% to 20% by weight, preferably 5% to 10% by weight, based on the weight of the plastic pallets used in the prepared solvent. The ultraviolet absorbent in the first area may be 0% by weight. The solution containing ultraviolet absorbents is applied onto the areas onto which ultraviolet-sensitive compound has been already applied. Therefore, when exposed to different ultraviolet radiation intensities, different color changes will be shown in each area, and the ultraviolet radiation intensity will be obtained immediately since the ultraviolet index readings are attached.

The present invention provides another ultraviolet radiation intensity indicator comprising at least one area, with a mixture of an ultraviolet-sensitive compound and an ultraviolet absorbent applied onto each area. Moreover, the ultraviolet-sensitive compounds applied onto each area are different and the ultraviolet absorbent is increased at a ratio of 0.1% to 20% by weight, based on the weight of plastic pallets used in the prepared solvent. The ultraviolet absorbent in the first area may be 0% by weight.

The present invention also provides an ultraviolet radiation intensity indicator comprising at least one area, with a mixture of an ultraviolet-sensitive compound and an ultraviolet absorbent applied onto each area. Moreover, the ultraviolet-sensitive compounds applied onto each area are identical and the other steps of preparation are the same as those set forth in the preceding paragraph.

Similarly, coating can be used in the preparation of the indicator of the present invention.

In the present invention, when a mixture of an ultraviolet-sensitive compound and an ultraviolet absorbent is used to coat an article or a substrate, the ultraviolet-sensitive compounds are identical in each area. When exposed to ultraviolet radiation, different areas will show different shades of the same color according to the intensity of the ultraviolet radiation.

The plan view of an indicator of ultraviolet radiation intensity according to the present invention is shown in figure 1, wherein four adjacent areas are provided and will respectively show, for instance, green, blue, yellow and pink, when the indicator is exposed to ultraviolet radiation. The ultraviolet radiation intensity corresponding to the color, green, is all UVI below 4; for blue, UVI between 4 to 6; for yellow, UVI between 6 to 9; and for pink, UVI above 10. With the UVI readings attached, users can immediately obtain a clear on-site indicator of ultraviolet radiation intensity by looking at the colors shown in the areas.

The indicator of the present invention can be applied directly onto an outdoor article. For example, the mixture of an ultraviolet-sensitive compound and an ultraviolet absorbent can be applied directly onto the shaft of a tennis racket to directly form an indicator on the racket. When people play tennis in the sun, the color changes of the direct indicator on the shaft of the racket can immediately indicate the ultraviolet radiation intensity. Furthermore, once the racket is brought under a shelter, the indicator on the shaft will resume its original colors. Of course, the concept of the present invention can also be applied to other articles in a similar way.

In the embodiment below, the preparation and character of the present invention will be further stated. However, the scope of the present invention shall not be limited by the embodiment.

### EXAMPLE

To prepare a solvent by dissolving 10 g of polyvinyl chloride in 90 g of THF, and add 0.05 g of ultraviolet-sensitive compound (Reversacol Sea Green, manufactured by James Robinson) to said solvent. A polyethylene sheet 100 µm thick was used as a substrate. The solution prepared above was applied onto a 1.5 cm x 2.0 cm rectangle area of the said substrate with a thickness of 50 µm.

The steps and conditions set forth in the preceding paragraph were repeated, except that 0.05 g of Reversacol Oxford Blue was used as the ultraviolet-sensitive compound. The solution containing Reversacol Oxford Blue was applied next to the previously coated area. Moreover, 0.05 g of ultraviolet absorbent, (2 - (2' - hydroxy - 5' - methylphenyl) - benzotriazole) was dissolved into 10 g of said solvent and applied onto the area coated.

The steps and conditions set forth in the preceding paragraph were repeated, except that 0.05 g of Reversacol Corn Yellow was used as the ultraviolet-sensitive compound. The solution containing Reversacol Corn Yellow was applied next to the area coated. Moreover, 0.1 g of ultraviolet absorbent, (2 - (2' - hydroxy - 5' - methylphenyl) - benzotriazole) was dissolved into 10 g of said solvent and applied onto the area coated third.

The steps and conditions set forth in the preceding paragraph were repeated, except that 0.05 g of Reversacol Plum Red was used as the ultraviolet-sensitive compound. The solution containing Reversacol Plum Red was applied next to the area coated third. Moreover, 0.15 g of ultraviolet absorbent, (2 - (2' - hydroxy - 5' - methylphenyl) - benzotriazole ) was dissolved into 10 g of said solvent and applied onto the area coated fourth. The indicator comprising the four areas for showing different ultraviolet radiation intensity had a thickness of 150 µm and UVI readings were attached to each area. Its plane view is shown in figure 1. Before being exposed to the ultraviolet radiation or sunlight, the areas will stay their original colors, e.g. light brown in the case of 4-6; colorless in the case of 6-8; colorless in the case of 8-10; and colorless in the case of 10 and above; based on the UVI_{WMO} readings.

When the indicator was irradiated with Solar Simulator (model no. XPS 200, Serial no. 3043,) the intensity of ultraviolet radiation shown by UVI reading was 4 (this was measured based on Solar Tech Model SM 6.5 Serial No. 00078 and Solar Light Co. UV meter Model 3D Serial No. 002137) and the indicator changed to green. Once the ultraviolet light was removed, the area of the indicator resumed its original color. Increasing the intensity of the ultraviolet light to the UVI reading of 6 and irradiating the indicator, the indicator changed to green and blue. Once the ultraviolet light was removed, the areas resumed their original colors. Increasing the intensity of the ultraviolet light to the UVI reading of 9 and irradiating the indicator, the indicator changed to green, blue and yellow in three areas. Once the ultraviolet light was removed, the three areas of the indicator resumed their original colors. Increasing the intensity of the ultraviolet light to the UVI reading of 10 and irradiating the indicator, all of the areas of the indicator changed colors to green, blue, yellow and red. Once the ultraviolet light was removed, the areas of the indicator resumed their original colors. Therefore, the indicator is capable of immediately indicating the ultraviolet radiation intensity with a clear UV index.

While the invention has been described with respect to certain preferred exemplifications and embodiments, it is not intended to limit the scope of the invention thereby, but solely by the claims appended hereto.

## Claims

1. An ultraviolet radiation intensity indicator having an indicator composition at at least one area thereof, an ultraviolet-sensitive compound being present at each said area and an ultraviolet absorbent being present at least one of said areas, and index markings being associated with each area, wherein when the areas are exposed to ultraviolet radiation, the indicator will show one or more color or shade changes in accordance with the intensity of the ultraviolet radiation.

2. An indicator according to claim 1 wherein the number of areas is four or more.

3. An indicator according to claim 1 or 2, wherein substantially identical ultraviolet-sensitive compounds are applied to each of the areas.

4. An indicator according to claim 1, 2 or 3, wherein the or each ultraviolet-sensitive compound comprises spiropyran, spirooxazine, chromate or a mixture thereof.

5. An indicator according to any preceding claim, wherein the or each ultraviolet absorbent comprises a pyridine compound or a compound capable of absorbing and/or shielding the ultraviolet radiation.

6. An indicator according to any preceding claim having a means of attachment for securing it to a substrate.

7. An indicator according to any of claims 1-5, in a form suitable as a coating for a substrate.

8. A indicator according to claim 6 or 7, in which the substrate comprises an article for outdoor activities.

9. An indicator according to any preceding claim, having more than one said area, in which the weight per unit area of ultraviolet absorbent at one area is greater than that at another area, no two said areas having the same weight per unit area of absorbent.

10. An indicator according to claim 9, wherein said weight per unit area increases from a first area to a second area by up to 20% of the weight per unit area of the composition at that first area.

11. An indicator according to claim 9, wherein the ratio of ultraviolet absorbent in one of the areas is 0% by weight.

12. An indicator according to any preceding claim, wherein the ultraviolet-sensitive compound is dissolved in a solvent before application.

13. An indicator according to any preceding claim, wherein the ultraviolet absorbent is dissolved in a solvent before application.

14. An indicator according to claim 12 or 13, wherein the solvent is prepared by dissolving plastics pellets in an organic solvent comprising benzene, toluene, acetone or THF.

15. An indicator according to claims 10 and 14, wherein the ultraviolet absorbent increases about 5% by weight, based on the weight of plastics pellets used in the prepared solvent.
